# DEMANDE DE BREVET EUROPEEN

(11) **EP 1 314 501 A1**
(43) Date de publication de la demande: **28.05.2003**
(21) Numéro de dépôt: 02356174.9
(22) Date de dépôt: 16.09.2002
(51) Int. Cl.: B23C 3/05

(54) **Tete à aléser à avance d'outil indépendante de la rotation**

(30) Priorité: 26.11.2001 FR 0115463
(71) Demandeur: MACHINES SERDI, 74000 Annecy (FR)
(72) Inventeur: Gruber, Philippe, 1603 Grandvaux (CH); Viellard, Renaud, 74380 Lucinges (FR)
(74) Mandataire: Maureau, Philippe

(57) **Abrégé**

La transmission du mouvement de rotation au pignon d'entraînement (19) du chariot (16) est assurée par :
- un premier train d'engrenages (I) avec cage (20) montée rotative autour de l'arbre axial (9) et dont la couronne (22) engrène avec un pignon (23) calé sur l'arbre d'un moteur électrique (24) porté par le corps (7), ce train portant au moins deux pignons satellites superposés (26, 27), et s'engrenant, celui supérieur (26), avec une denture (29) ménagée autour de l'arbre axial (9), et, celui inférieur (27), avec un pignon planétaire de sortie (30),
- un second train (II) dont le planétaire (39) est solidaire du planétaire de sortie (30) du premier train (I) et s'engrène avec le pignon satellite supérieur (36) d'au moins un ensemble de pignons satellites superposés (36, 37), montés libres en rotation dans un prolongement du corps (7), le pignon satellite inférieur (37) s'engrenant avec une denture (40) qui, ménagée sur le pignon d'entraînement (19) du chariot, est distincte de celle coopérant avec la crémaillère (18) de ce chariot (16),
ces deux planétaires (I et II) ayant des raisons différentes de 1 et inverse, tandis que le moteur électrique (24) d'entraînement de la cage et celui (21) de translation du fourreau sont alimentés sous le contrôle de l'unité (25) de commande et de contrôle.

## Description

L'invention est relative à une tête à aléser à avance d'outil indépendante de la rotation destinée, plus particulièrement quoique non exclusivement, à l'usinage des sièges de soupape de moteur thermique.

En général, un siège de soupape comprend une portée conique contre laquelle vient s'appuyer la soupape et constituant le siège proprement dit et deux dégagements coniques disposés, respectivement, à l'extérieur et à l'intérieur, ces trois surfaces coniques formant des angles différents par rapport à l'axe longitudinal du guide tige coopérant avec la tige de soupape.

Pendant longtemps, les sièges ont été usinés au moyen d'un appareil qui, fabriqué par la société allemande HUNGER, et se fixant sur un support lié à la structure portant la culasse, comporte une tête rotative avec tige pilote se positionnant dans le guide tige, moyen manuel d'entraînement en rotation de la tête et, dans cette tête, une rainure inclinée guidant un chariot coulissant portant l'outil de coupe. Cette tête contient également, entre les moyens manuels d'entraînement en rotation et une douille dentée coopérant avec une crémaillère du chariot, un train d'engrenages qui, lors de la rotation de la manivelle, génère le mouvement rotatif de la broche, donc le mouvement de coupe, mais aussi le déplacement radial de l'outil. Il en résulte que l'expansion radiale de l'outil est directement proportionnelle à son déplacement angulaire, donc à la vitesse communiquée à la broche.

Ce type de tête à aléser a été abandonné en raison de l'insuffisance de l'effort de coupe fourni manuellement qui ne permettait pas d'usiner les sièges présentant une dureté de plus en plus grande.

Le document WO99/52664 décrit une tête construite suivant ce principe mais dans laquelle les mouvements de rotation et de translation de la broche sont motorisés sous le contrôle d'un régulateur recevant, d'une part, des données d'usinage et, d'autre part, les informations d'une jauge de profondeur. Comme dans la tête HUNGER, le rayon de coupe est modifié proportionnellement au nombre de tours de rotation de la broche.

Une telle tête peut usiner des sièges de plus grande dureté, puisque l'outil dispose d'un couple plus important, mais présente les mêmes inconvénients que la tête manuelle, à savoir : impossibilité de maîtriser l'état de surface au moins sur certaines des surfaces coniques composant un siège.

En effet, et en particulier sur les surfaces coniques à forte pente, l'outil doit se déplacer radialement à plus grande vitesse, de sorte que l'arête de coupe ponctuelle de l'outil n'a pas le temps de repasser sur la surface usinée, ce qui conduit à un état de surface peu satisfaisant. De même, il est connu que les têtes, dans lesquelles le rayon de coupe est modifié proportionnellement au nombre de tours de rotation de la broche, ne peuvent pas réaliser un alésage cylindrique, alors même que cela permettrait de rentabiliser leur acquisition.

La présente invention a pour objet de fournir une tête à aléser à avance de coupe indépendante de la rotation qui remédie à ces inconvénients et permet, entre autres, d'obtenir un état de surface constant sur toute la partie usinée, quel que soit l'angle de pente entre 0 et 90°.

Comme les têtes à aléser connues, celle selon l'invention comporte
- un corps apte à être lié au fourreau de broche d'une machine outil, ce fourreau étant déplaçable longitudinalement par des moyens par des moyens électriques,
- un arbre axial apte à être lié en rotation à la broche disposée dans le fourreau, ladite broche étant elle-même reliée à un moteur électrique apte à l'entraîner en rotation à vitesse variable sous le contrôle d'un programmateur ou autre unité équivalente de commande programmable et de contrôle,
- un chariot déplaçable radialement par engrènement de sa crémaillère avec un pignon d'entraînement disposé dans le corps,
- et un porte outil fixé à l'extrémité libre du chariot.

La tête, selon l'invention, est caractérisée en ce que la transmission du mouvement de rotation au pignon d'entraînement du chariot est assurée par deux trains d'engrenages épicycloïdaux en cascade, à savoir :
- un premier train avec cage montée rotative autour de l'arbre axial et dont la couronne engrène avec un pignon calé sur l'arbre d'un moteur électrique porté par le corps, ce train portant au moins deux pignons satellites superposés, montés libres en rotation dans la cage et s'engrenant, celui supérieur, avec une denture ménagée autour de l'arbre axial, et, celui inférieur, avec un pignon planétaire de sortie,
- un second train dont le planétaire est solidaire du planétaire de sortie du premier train et s'engrène avec le pignon satellite supérieur d'au moins un ensemble de pignons satellites superposés, montés libres en rotation dans un prolongement du corps, le pignon satellite inférieur s'engrenant avec une denture qui, ménagée sur le pignon d'entraînement du chariot, est distincte de celle coopérant avec la crémaillère de ce chariot, ces deux planétaires ayant des raisons différentes de 1 et inverse, tandis que le moteur électrique d'entraînement de la cage et celui commandant la translation du fourreau sont alimentés sous le contrôle de l'unité de commande et de contrôle.

Dans cette tête, lorsque le moteur d'entraînement de la cage n'est pas alimenté, les raisons opposées des deux trains épicycloïdaux s'annulent, de sorte que le pignon d'entraînement du chariot ne commande pas la crémaillère et que le chariot, le porte outil et l'outil ne sont soumis à aucun déplacement radial. Par contre, lorsque le moteur d'entraînement est alimenté pour tourner dans un sens ou dans l'autre, le pignon d'entraînement du chariot pivote dans un sens ou dans l'autre, en provoquant le déplacement radial du chariot, du porte outil et de l'outil.

La combinaison interpolée de cette fonction de déplacement d'outils sur un axe U, correspondant au rayon d'usinage avec la fonction de déplacement de la broche, suivant un axe approximativement vertical Z, permet d'usiner n'importe quelle surface de révolution autour de l'axe longitudinal de la tête, et en conséquence autour de l'axe du pilote, si cette tête est solidaire d'une tige pilote.

Dans une forme d'exécution de l'invention, le moteur d'entraînement de la cage du premier train d'engrenages épicycloïdal est de type BRUSHLESS, avec résolveur intégré.

Ce moteur est donc équipé de moyens permettant, à tout instant, de connaître la vitesse et la position angulaire de son rotor et de l'ajuster en fonction des besoins par l'unité de contrôle. Cela permet de positionner parfaitement l'outil en lui communiquant une vitesse variable programmée, et en conséquence, de travailler à copeaux constants, c'est-à-dire dans les meilleures conditions de coupe, quel que soit l'angle que forme la surface usinée par rapport à l'axe longitudinal de la broche.

L'invention sera mieux comprise à l'aide de la description qui suit en référence au dessin schématique annexé représentant, à titre d'exemple, une forme d'exécution de la tête à aléser selon l'invention.

Figure 1 est une vue en coupe longitudinale de la tête lorsqu'elle est montée à l'extrémité du fourreau d'une machine à rectifier les sièges de soupape,

Figure 2 est une vue partielle, en coupe, de la partie inférieure de la tête, la coupe étant réalisée dans un plan décalé à 90° par rapport à celui de la figure 1, pour mieux faire voir la crémaillère et le chariot,

Figure 3 est une vue schématique montrant, de manière simplifiée, les deux trains d'engrenages.

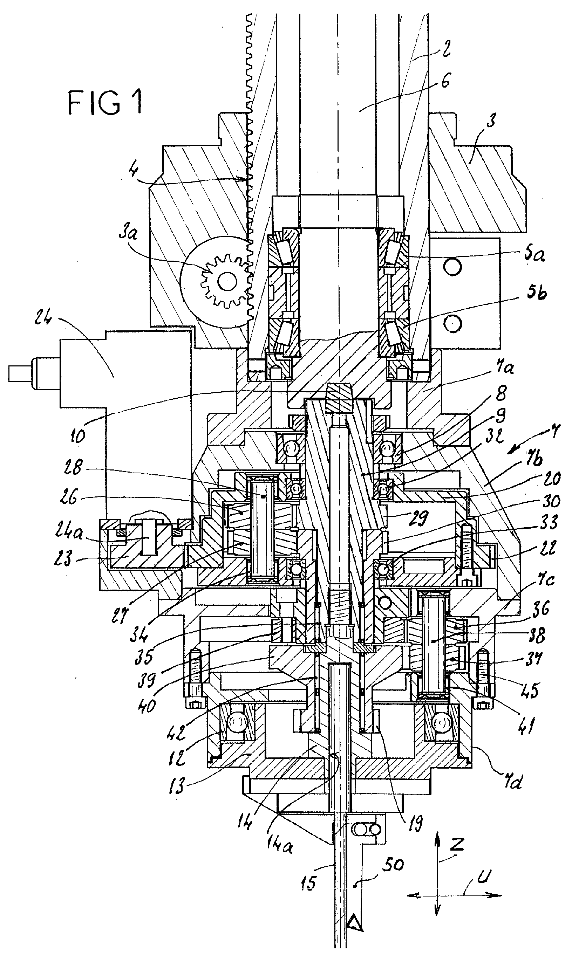

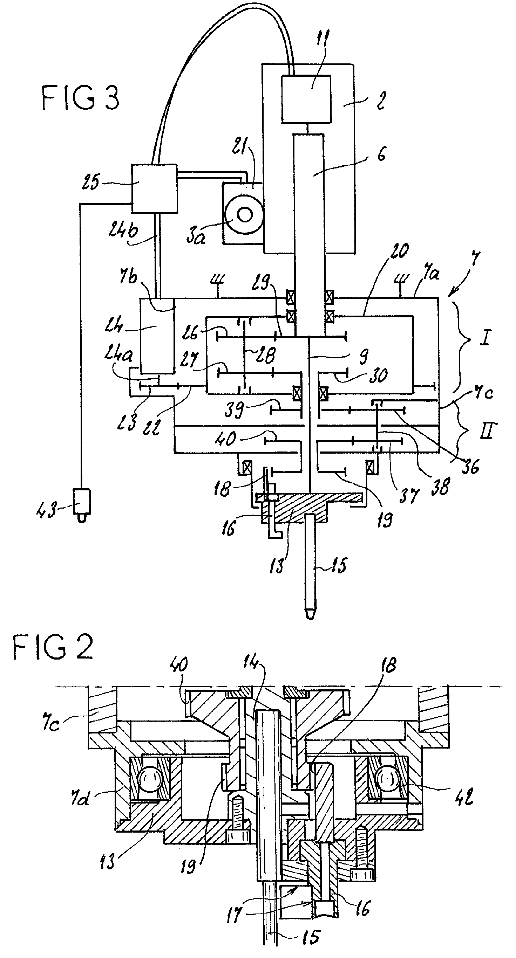

A la figure 1, la référence numérique 2 désigne le fourreau d'une machine outil, et en particulier, d'une machine à rectifier les soupapes. Ce fourreau est monté coulissant dans une structure 3 permettant de le déplacer dans le plan horizontal par rapport au bâti de la machine. Il peut lui-même être déplacé verticalement par coopération d'une roue dentée 3a avec la crémaillère 4 dont il est muni. La roue dentée 3a est liée en rotation à une commande manuelle, non représentée, et à un moteur électrique 21 (figure 3). Ce fourreau contient des roulements à rouleaux coniques 5a, 5b qui assurent le guidage en rotation d'une broche 6, reliée à un moteur électrique 11.

La tête, selon l'invention, est composée d'un corps 7 en plusieurs parties dont la partie supérieure 7a, en forme de manchon, est fixée à l'extrémité inférieure du fourreau 2. Sa partie 7b, en forme de cloche, contient un roulement 8 guidé en rotation à un arbre axial intermédiaire 9 qui est lié en rotation par une clavette transversale 10 à la broche 6. Le corps comporte encore une partie inférieure 7c, en forme de boîtier, et se prolonge par un manchon 7d contenant un roulement à billes 12 servant au guidage en rotation d'un couvercle 13 lié en rotation à un prolongement 14 de l'arbre intermédiaire 9. Dans cette forme d'exécution, le prolongement 14 comporte un alésage 14a de réception et de positionnement d'une tige pilote 15.

Les différents éléments du corps 7 sont liés les uns aux autres par des vis, du type de celles représentées en 45. La figure 2 montre que le couvercle 13 est aménagé pour guider, en translation radiale, un chariot 16 muni de faces 17 de positionnement et de fixation d'un porte outil 50 (figure 1). Ce chariot est également solidaire d'une crémaillère 18 s'engrenant avec un pignon d'entraînement 19, monté libre en rotation autour du prolongement 14 de l'arbre 9.

La transmission du mouvement de rotation de la broche 6 à l'outil s'effectue normalement par l'arbre intermédiaire 9, par l'arbre prolongateur 14 et par le couvercle 13, tandis que la transmission du mouvement de rotation au pignon 19 provoquant le déplacement radial du chariot 16 est assurée par un mécanisme qui va d'abord être décrit en référence à la figure 3. Ce mécanisme est composé de deux trains d'engrenages épicycloïdaux, disposés en cascade, à savoir un premier train I et un second train II.

Le train I comprend une cage 20, dont la couronne 22 s'engrène avec un pignon moteur 23 calé à l'extrémité de l'arbre 24a, d'un moteur électrique 24. Le corps de ce moteur électrique est fixé sur la partie 7b du corps de la tête à aléser. Ce moteur est avantageusement de type BRUSHLESS, c'est-à-dire synchrone avec rotor à aimants permanents. Il est équipé d'un résolveur intégré qui est relié par des circuits 24b à l'unité de commande et de contrôle 25, contrôlant également le moteur électrique 11 assurant l'entraînement en rotation de la broche 6 et le moteur 21 de déplacement du fourreau 2.. La cage 20 porte au moins un ensemble de pignons satellites étagés, respectivement 26 et 27, calés en rotation sur un arbre commun 28. Le pignon supérieur 26 engrène avec une denture 29, ménagée à l'extrémité de l'arbre intermédiaire 9, tandis que le pignon satellite inférieur 27 engrène avec un planétaire de sortie 30.

La figure 1 montre que la cage 20 est guidée en rotation par des roulements 32, 33 interposés entre elle, et respectivement, l'arbre intermédiaire 9 et un prolongement du planétaire de sortie 30, tandis que les extrémités de l'arbre 28 portant les deux pignons satellites 26 et 27 sont montés libres en rotation dans des roulements à aiguilles 34.

De même, le planétaire de sortie 30 est guidé en rotation par des roulements à aiguilles 35 interposées entre lui et l'arbre intermédiaire 9.

Le second train d'engrenages II (figure 3) comprend une cage fixe constituée par la partie 7c du corps, au moins un ensemble de pignons satellites 36, 37 calés sur un arbre commun 38. Le pignon satellite supérieur 36 s'engrène avec un pignon planétaire 39, solidaire en translation et en rotation du pignon planétaire de sortie 30 du premier train d'engrenages, tandis que le pignon satellite inférieur 37 s'engrène avec un pignon planétaire 40 faisant corps avec le pignon d'entraînement 19.

La figure 1 montre que les extrémités de l'arbre 38 des pignons satellites sont guidées en rotation dans des paliers à aiguilles 41, tandis que le pignon double 19, 40 est guidé en rotation par des roulements à aiguilles 42 interposées entre son alésage interne et l'arbre prolongateur 14. Cette figure montre également que, malgré la présence des deux trains d'engrenages I et II, la tête est relativement compacte.

Les différents engrenages constituant chacun des trains sont calculés de manière que leur raison, c'est-à-dire leur rapport général, soit différente de 1, et plus précisément que la raison du second train d'engrenages soit, par exemple, de 1,008, alors que la raison du premier train est inverse, et par exemple de 1/1,008.

Grâce à cela, lorsque le moteur électrique 24 n'est pas alimenté, les raisons des deux trains d'engrenages s'annulent et le pignon d'entraînement 19 tourne à la même vitesse que la broche 6 et dans le même sens, de sorte qu'il ne génère aucun mouvement relatif de la crémaillère 18 du chariot 16 et du porte outil. Ce qui permet, par exemple, de réaliser une surface cylindrique.

Par contre, dès que le moteur 24 est alimenté, dans un sens ou dans l'autre, le pignon d'entraînement 19 tourne à une vitesse différente de la broche, en avance ou en retard, et en conséquence, provoque le déplacement relatif de la crémaillère par rapport au couvercle 13 qui la contient, et provoque donc un déplacement radial de l'outil.

La régulation, à travers l'unité 25 de commande et de contrôle de l'alimentation du moteur 24 commandant les déplacements de l'outil sur l'axe U et de l'alimentation du moteur 21 commandant les déplacements longitudinaux du fourreau 2 sur l'axe Z, permet d'usiner n'importe quelle surface de révolution autour de l'axe longitudinal de la tête.

Il est précisé que, de façon connue, le point de départ des mouvements de l'outil sur l'axe Z est déterminé :
- soit en cote absolue de la machine, si la culasse possède des références absolues par rapport à ladite machine (posage de la pièce en référence avec les alésages des arbres à cames),
- soit en cote relative à la position physique du plan de joint, auquel cas on utilise un doigt de palpage 43, relié à l'unité 25 de commande et de contrôle. Ce doigt est amené au contact du plan de joint de la culasse et sert de référence relative à l'axe Z de la machine.

Le dispositif, qui a été décrit ci-dessus avec une tige pilote 15, peut bien entendu être utilisé sans tige pilote, par exemple pour réaliser des portées de joint sur des vannes ou autres.

## Revendications

1. Tête à aléser à avance de coupe indépendante de la rotation comportant :
- un corps (7) apte à être lié au fourreau (2) de broche d'une machine outil, ce fourreau (2) étant déplaçable au moins par des moyens électriques (21),
- un arbre axial (9) apte à être lié en rotation à la broche (6) disposée dans le fourreau (2), ladite broche étant elle-même reliée à un moteur électrique (21) apte à l'entraîner en rotation à vitesse variable sous le contrôle d'un programmateur ou autre unité équivalente (25) de commande programmable et de contrôle,
- un chariot (16) déplaçable radialement par engrènement de sa crémaillère (18) avec un pignon d'entraînement (19) disposé dans le corps (7),
- et un porte outil fixé à l'extrémité libre du chariot,
**caractérisée en ce que** la transmission du mouvement de rotation au pignon d'entraînement (19) du chariot (16) est assurée par deux trains d'engrenages épicycloïdaux en cascade, à savoir :
- un premier train (I) avec cage (20) montée rotative autour de l'arbre axial (9) et dont la couronne (22) engrène avec un pignon (23) calé sur l'arbre d'un moteur électrique (24) porté par le corps (7), ce train portant au moins deux pignons satellites superposés (26, 27), montés libres en rotation dans la cage (20) et s'engrenant, celui supérieur (26), avec une denture (29) ménagée autour de l'arbre axial (9), et, celui inférieur (27), avec un pignon planétaire de sortie (30),
- un second train (II) dont le planétaire (39) est solidaire du planétaire de sortie (30) du premier train (I) et s'engrène avec le pignon satellite supérieur (36) d'au moins un ensemble de pignons satellites superposés (36, 37), montés libres en rotation dans un prolongement du corps (7), le pignon satellite inférieur (37) s'engrenant avec une denture (40) qui, ménagée sur le pignon d'entraînement (19) du chariot, est distincte de celle coopérant avec la crémaillère (18) de ce chariot (16),
ces deux planétaires (I et II) ayant des raisons différentes de 1 et inverse, tandis que le moteur électrique (24) d'entraînement de la cage et celui (21) de translation du fourreau sont alimentés sous le contrôle de l'unité (25) de commande et de contrôle.

2. Tête à aléser selon la revendication 1, **caractérisée en ce que** la raison du premier train d'engrenages épicycloïdaux (I) est de 1/1,008, tandis que celle du second train est de 1,008.

3. Tête à aléser selon la revendication 1, **caractérisée en ce que** le moteur (24) d'entraînement de la cage du premier train d'engrenages épicycloïdaux (I) est de type BRUSHLESS, avec résolveur intégré.
